# EUROPEAN PATENT APPLICATION

(11) **EP 4 566 879 A1**
(43) Date of publication of application: **11.06.2025**
(21) Application number: 23848881.1
(22) Date of filing: 20.03.2023
(51) Int. Cl.: B60N 2/28, B60R 21/16

(54) **CHILD CAR SAFETY SEAT AND AIRBAG PACKAGE**

(30) Priority: 03.08.2022 CN 202210925785; 18.10.2022 CN 202222734301 U
(71) Applicant: Goodbaby Child Products Co., Ltd., Kunshan, Jiangsu 215331 (CN)
(72) Inventor: HE, Xinjun, Suzhou, Jiangsu 215331 (CN); GAO, Xiang, Suzhou, Jiangsu 215331 (CN); KUANG, Zhiyong, Suzhou, Jiangsu 215331 (CN); FENG, Bo, Suzhou, Jiangsu 215331 (CN)
(74) Representative: Murgitroyd & Company
(86) International application number: PCT/CN2023/082450
(87) International publication number: WO 2024/027166

(57) **Abstract**

A child car safety seat, including a seat body (1) and an airbag package (2) arranged on the seat body (1). The airbag package (2) includes an airbag package cover (21), a high-pressure air cylinder (23), a high-pressure air cylinder container (22), and an airbag (24); the high-pressure air cylinder container (22) is placed in the airbag package cover (21); the high-pressure air cylinder (23) is placed in the high-pressure air cylinder container (22); the high-pressure air cylinder (23) is provided with an air outlet (230); the air outlet (230) has a closed state and an open state; the airbag (24) is provided with an airbag cavity (240) and an air inlet (241) connected to the air outlet (230) of the high-pressure air cylinder (23); the airbag (24) has a folded state and an inflated state; in the folded state, the airbag (24) is at least partially folded and placed in the airbag package cover (21), and when the airbag (24) is in the inflated state, the air outlet (230) of the high-pressure air cylinder (23) is in the open state, and air enters the airbag cavity (240), so that the airbag (24) breaks through the airbag package cover (21). Also disclosed is an airbag package. The airbag package has a simple structure, occupies less space in a folded state, provides good support and protection for the head of a child in an inflated state, and has high safety.

## Description

### TECHNICAL FIELD

The present disclosure belongs to the technical field of products for children and, in particular, relates to a child car safety seat and an airbag package.

### BACKGROUND

A child car safety seat is a seat designed specifically for children, and the seat can be installed in a car and can effectively improve the safety of children riding in a car. At present, child car safety seats have become one of the essential items for children to travel by car. They can well protect the safety of children riding in a car when the car is running. Moreover, the child car safety seats can meet the comfort needs of children riding in the car. In use of a child car safety seat, a seat body is fixed to the car seat, and a child can sit on the seat body and be tied up by a seat belt. However, when a car crash happens, due to the inertia force caused by the strong impact force, the upper body of the child will still rush forward, and the child may run into a front seat and get injured.

In order to improve safety, some child car safety seats are equipped with airbag devices, which are usually arranged on two sides of a seat body. When a car runs normally, the airbag device is in a retracted state and is contained inside a seat body. When a car crash happens, the airbag device will be inflated and shot out of the seat body to protect the child's body. However, this airbag device still lacks good protection for the child's head. The inflated airbag device cannot provide good support and protection for the child's head. In addition, the structure of a conventional airbag device is usually more complicated, and an installation structure between the air bag device and a seat body is also complicated, and the process is cumbersome.

### SUMMARY

An objective of the present disclosure is to provide a child car safety seat with good safety, so as to solve the problems existing in the prior art.

To achieve the above objective, the technical solution adopted by the present disclosure is as follows:

A child car safety seat, including a seat body, the seat body being connected to an airbag package for protecting a child when a car crash happens, the airbag package including:
an airbag package cover, the airbag package cover having an airbag receiving chamber;
a high-pressure air cylinder storing high-pressure air, the high-pressure air cylinder having an air outlet, wherein the air outlet of the high-pressure air cylinder has a closed state and an open state, and when the air outlet of the high-pressure air cylinder is in the closed state, the high-pressure air is enclosed in the high-pressure air cylinder, and when the air outlet of the high-pressure air cylinder is in the open state, the high-pressure air is ejected from the air outlet of the high-pressure air cylinder;
a high-pressure air cylinder container, the high-pressure air cylinder container being placed in the airbag package cover, the high-pressure air cylinder being contained in the high-pressure air cylinder container; and
an airbag, the airbag having an airbag cavity and an air inlet which are connected to each other, wherein the air inlet of the airbag is connected to the air outlet of the high-pressure air cylinder, and the air inlet of the airbag is fixedly connected to the high-pressure air cylinder container and/or the air outlet of the high-pressure air cylinder; the airbag having a folded state and an inflated state, wherein when the airbag is in the folded state, the airbag is at least partially folded and placed in the airbag package cover and the air outlet of the high-pressure air cylinder is in the closed state, and when the airbag is in the inflated state, the air outlet of the high-pressure air cylinder is in the open state, and the high-pressure air enters the airbag cavity from the air outlet of the high-pressure air cylinder through the air inlet of the airbag, so that at least part of the airbag breaks through the airbag package cover and goes out of the airbag package cover.

Preferably, when the airbag is in the inflated state, a cross section of the airbag is in an inverted "C" shape, one end of the inverted "C" shape of the airbag serves as the air inlet of the airbag, and the other end of the inverted "C" shape is fixedly connected to the high-pressure air cylinder container. The inverted "C" shape of the airbag can provide good support for the child's head and reduce the impact force, thereby improve safety.

Further preferably, the airbag package further includes a first tether, one end of the first tether is connected to the other end of the airbag, and the other end of the first tether is fixedly connected to the high-pressure air cylinder container. By providing the first tether, it can be ensured that the airbag is in an inverted "C" shape when inflated and the other end of the airbag does not tilt upward.

Further preferably, the airbag package further includes at least one second tether, one end of the second tether is fixedly connected to a middle part of the airbag, and the other end of the second tether is fixedly connected to the high-pressure air cylinder container; when the airbag is in the folded state, the second tether is located in the airbag package cover, and when the airbag is in the inflated state, the second tether is in a tensioned state and is at least partially located outside the airbag package cover. By providing the second tethers, it can be ensured that the airbag as a whole has good tensile support when the airbag is in the inflated state.

In a specific embodiment, two second tethers are provided, and the two second tethers are arranged crosswise or in parallel.

Further preferably, the airbag cavity includes a first airbag cavity and a second airbag cavity, one end of the first airbag cavity forms the air inlet of the airbag, one end of the second airbag cavity is fixed to the high-pressure air cylinder container, and the other end of the first airbag cavity and the other end of the second airbag cavity are connected by an airflow passage.

Further preferably, the airbag package further includes at least one second tether, one end of the second tether is fixedly connected to the airbag at an outer wall of the airflow passage, and the other end of the second tether is fixedly connected to the high-pressure air cylinder container; when the airbag is in the folded state, the second tether is located in the airbag package cover, and when the airbag is in the inflated state, the second tether is in a tensioned state and is at least partially located outside the airbag package cover.

Preferably, a safety belt assembly is arranged on the seat body and includes shoulder belts arranged on left and right sides and a central buckle, wherein a lower part of the central buckle is directly or indirectly connected to the seat body, one ends of the shoulder belts on two sides are connected to the seat body, the other ends of the shoulder belts on two sides are detachably connected to the central buckle, and a lower part of the high-pressure air cylinder container is arranged at the rear of the central buckle.

Further preferably, an upper part of the high-pressure air cylinder container is provided with mating portions on left and right sides thereof, and the mating portions are mated with the shoulder belts on the corresponding sides respectively; when the safety belt assembly is in a tensioned state, the shoulder belts on two sides are respectively pressed into the mating portions on the corresponding sides to form a three-point limiting structure for the high-pressure air cylinder container. In this way, when a car crash happens, the high-pressure air cylinder container can be prevented from moving forward, so that the airbag is kept away from the child after inflation, thereby providing good support and protection for the child's head.

Further preferably, the mating portions are guide grooves that are concave inward from a front surface of the high-pressure air cylinder container, the guide grooves extend obliquely in an up-down direction, and two ends of each guide groove in a length direction respectively penetrate the corresponding ends of the high-pressure air cylinder container.

In a specific embodiment, the safety belt assembly further includes a crotch belt, one end of the crotch belt is connected to the seat body, and the other end of the crotch belt is connected to the central buckle. That is, the central buckle is arranged on the seat body through a flexible connection.

Preferably, a lower end of the high-pressure air cylinder container is connected to the crotch belt.

In another specific embodiment, the lower part of the central buckle is rotatably connected to the seat body by a rotating shaft, and the rotating shaft extends in a left-right direction. That is, the central buckle is arranged on the seat body through a hard connection.

Preferably, when the airbag is in the folded state, at least part of the high-pressure air cylinder container, at least part of the airbag, and at least part of the high-pressure air cylinder are located in the airbag receiving chamber of the airbag package cover. As a result, the airbag package has a small size and occupies less space.

Preferably, when a car runs normally, the air outlet of the high-pressure air cylinder is in the closed state, and when a car crash happens, the air outlet of the high-pressure air cylinder is automatically triggered to enter the open state.

Another objective of the present disclosure is to provide a simple, safe and reliable airbag package, so as to solve the problems existing in the prior art.

To achieve the above objective, the technical solution adopted by the present disclosure is as follows:
An airbag package, including:
an airbag package cover, the airbag package cover having an airbag receiving chamber;
a high-pressure air cylinder storing high-pressure air, the high-pressure air cylinder having an air outlet, wherein the air outlet of the high-pressure air cylinder has a closed state and an open state, and when the air outlet of the high-pressure air cylinder is in the closed state, the high-pressure air is enclosed in the high-pressure air cylinder, and when the air outlet of the high-pressure air cylinder is in the open state, the high-pressure air is ejected from the air outlet of the high-pressure air cylinder;
a high-pressure air cylinder container, the high-pressure air cylinder container being placed in the airbag package cover, the high-pressure air cylinder being contained in the high-pressure air cylinder container; and
an airbag, the airbag having an airbag cavity and an air inlet which are connected to each other, wherein the air inlet of the airbag is connected to the air outlet of the high-pressure air cylinder, and the air inlet of the airbag is fixedly connected to the high-pressure air cylinder container and/or the air outlet of the high-pressure air cylinder; the airbag having a folded state and an inflated state, wherein when the airbag is in the folded state, the airbag is at least partially folded and placed in the airbag package cover and the air outlet of the high-pressure air cylinder is in the closed state, and when the airbag is in the inflated state, the air outlet of the high-pressure air cylinder is in the open state, and the high-pressure air enters the airbag cavity from the air outlet of the high-pressure air cylinder through the air inlet of the airbag, so that at least part of the airbag breaks through the airbag package cover and goes out of the airbag package cover.

Preferably, when the airbag is in the inflated state, a cross section of the airbag is in an inverted "C" shape, one end of the inverted "C" shape of the airbag serves as the air inlet of the airbag, and the other end of the inverted "C" shape of the airbag is fixedly connected to the high-pressure air cylinder container. The inverted "C" shape of the airbag can provide good support for the child's head and reduce the impact force, thereby improve safety.

Further preferably, the airbag package further includes a first tether, one end of the first tether is connected to the other end of the airbag, and the other end of the first tether is fixedly connected to the high-pressure air cylinder container. By providing the first tether, it can be ensured that the airbag is in an inverted "C" shape when inflated and the other end of the airbag does not tilt upward.

Further preferably, the airbag package further includes at least one second tether, one end of the second tether is fixedly connected to a middle part of the airbag, and the other end of the second tether is fixedly connected to the high-pressure air cylinder container; when the airbag is in the folded state, the second tether is located in the airbag package cover, and when the airbag is in the inflated state, the second tether is in a tensioned state and is at least partially located outside the airbag package cover. By providing the second tethers, it can be ensured that the airbag as a whole has good tensile support when the airbag is in the inflated state.

In a specific embodiment, two second tethers are provided, and the two second tethers are arranged crosswise or in parallel.

Further preferably, the airbag cavity includes a first airbag cavity and a second airbag cavity, one end of the first airbag cavity forms the air inlet of the airbag, one end of the second airbag cavity is fixed to the high-pressure air cylinder container, and the other end of the first airbag cavity and the other end of the second airbag cavity are connected by an airflow passage.

Further preferably, the airbag package further includes at leas one second tether, one end of the second tether is fixedly connected to the airbag at an outer wall of the airflow passage, and the other end of the second tether is fixedly connected to the high-pressure air cylinder container; when the airbag is in the folded state, the second tether is located in the airbag package cover, and when the airbag is in the inflated state, the second tether is in a tensioned state and is at least partially located outside the airbag package cover. By providing the second tethers, it can be ensured that the airbag as a whole has good tensile support when the airbag is in the inflated state.

Preferably, when the airbag is in the folded state, at least part of the high-pressure air cylinder container, at least part of the airbag, and at least part of the high-pressure air cylinder are located in the airbag receiving chamber of the airbag package cover. As a result, the airbag package has a small size and occupies less space.

Due to the application of the described technical solutions, the present disclosure has the following advantages as compared with the prior art:
In the present disclosure, an airbag package is arranged on the child car safety seat, and the airbag package has a simple structure and good stability. In the folded state, the airbag package has a compact overall structure and occupies less space. In the inflated state, the airbag can provide good support and protection for a child's head, thereby avoiding or reducing injuries to the child's head and further improving safety. In addition, the installation structure between the airbag package and the seat body is simple, thereby improving the convenience of installation.

### BRIEF DESCRIPTION OF THE DRAWINGS

FIG. 1 is a schematic front view of a child car safety seat in Embodiment 1 when an airbag is in a folded state;
FIG. 2 is a schematic cross-sectional view of the child car safety seat cut along A-A in FIG. 1;
FIG. 3 is a schematic top view of the child car safety seat in Embodiment 1 when the airbag is in the folded state;
FIG. 4 is a schematic front view of the child car safety seat in Embodiment 1 when the airbag is in an inflated state (two second tethers are arranged crosswise);
FIG. 5 is another schematic front view of the child car safety seat in Embodiment 1 when the airbag is in the inflated state (two second tethers are arranged in parallel);

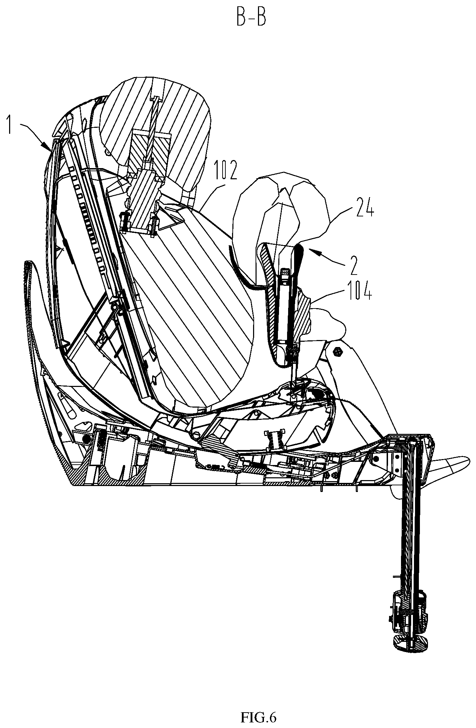

FIG. 6 is a schematic cross-sectional view of the child car safety seat cut along B-B in FIG. 4;
FIG. 7 is a schematic cross-sectional view of the airbag in Embodiment 1 in the folded state;
FIG. 8 is a schematic cross-sectional view of the airbag in Embodiment 1 when transformed from the folded state to the inflated state;
FIG. 9 is a schematic cross-sectional view of the airbag in Embodiment 1 in the inflated state;
FIG. 10 is a schematic front view of the airbag in Embodiment 1 in the inflated state; and

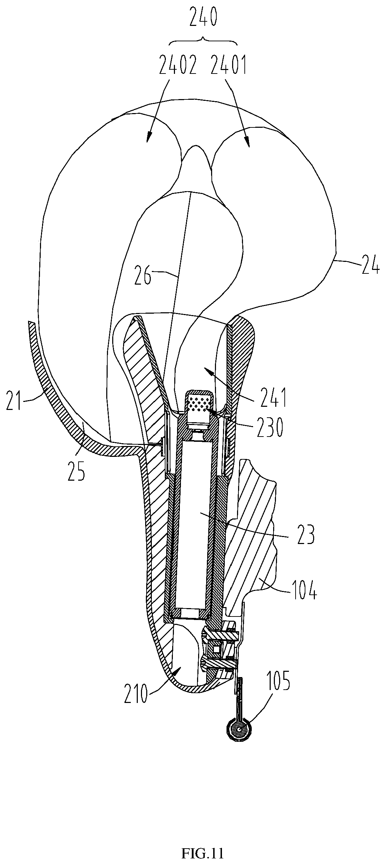

FIG. 11 is a schematic front view of the airbag in Embodiment 2 in the inflated state.

In the above figures: 1. seat body; 10. safety belt assembly; 101. left shoulder belt; 102. right shoulder belt; 103. crotch belt; 104. central buckle; 105. rotating shaft; 2. airbag package; 21. airbag package cover; 210. airbag receiving chamber; 22. high-pressure air cylinder container; 220. mating portion; 23. high-pressure air cylinder; 230. air outlet; 24. airbag; 240. airbag cavity; 2401. first airbag cavity; 2402. second airbag cavity; 2403. airflow passage; 241. air inlet; 25. first tether; 26. second tether.

### DETAILED DESCRIPTION OF THE EMBODIMENTS

The technical solution of the present disclosure will be described clearly and completely below in conjunction with the accompanying drawings, and it will be apparent that the embodiments described herein are merely some, not all of the embodiments of the present disclosure. Based on the embodiments of the present disclosure, all other embodiments obtained by those of ordinary skill in the art without creative work fall within the scope of the present disclosure.

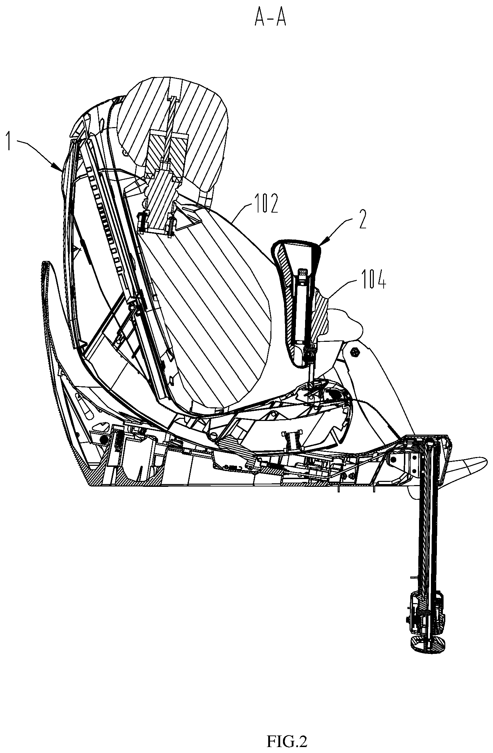

As used herein, the directions such as "front", "rear", "left", "right", "up" and "down" involved are all defined with reference to the seat body facing the running direction of a car. That is, as shown in FIG. 2, the right direction in the figure is designated "front", the left direction in the figure is designated "rear", the upper direction in the figure is designated "up", the lower direction in the figure is designated "down", and the directions perpendicular to the viewing angle in the figure are designated "left" and "right". The definitions of the above directions are only for the convenience of describing the present disclosure and simplifying the description, and do not indicate or imply that the indicated device or element must have a specific orientation, be constructed and operated in a specific orientation. In view of the foregoing, they should not be understood as a limitation on the present disclosure.

### Embodiment 1

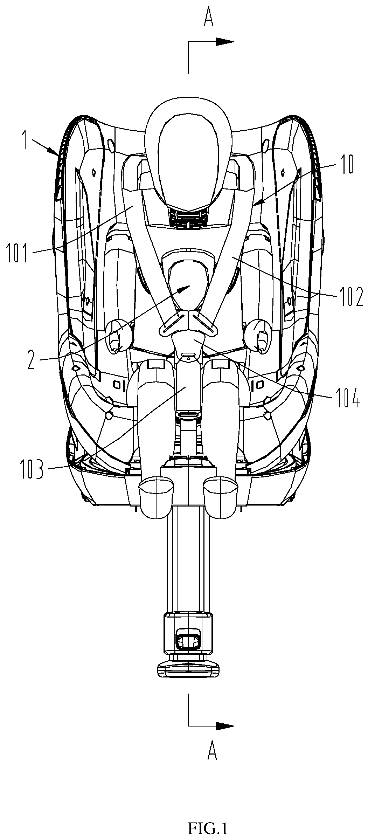

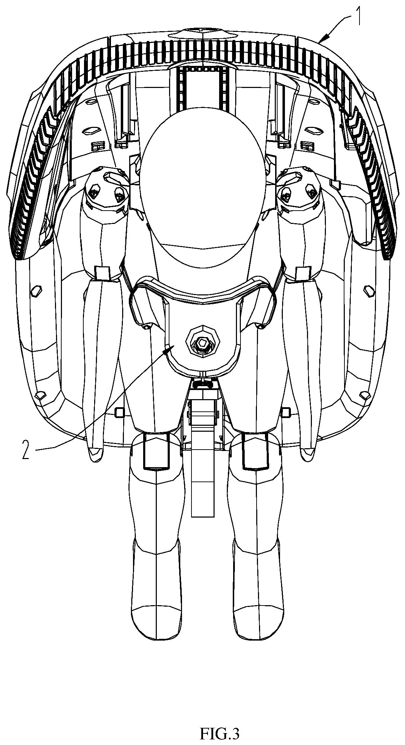

A child car safety seat, as shown in FIG.1 and FIGs. 3-5, includes a seat body 1 and an airbag package 2. The seat body 1 is configured to be installed on a car seat for a child to sit on. The airbag package 2 is arranged on the seat body 1. The airbag package 2 can protect the child's body in a car crash.

A safety belt assembly 10 is arranged on the seat body 1. As shown in FIGs. 1, 4 and 5, the safety belt assembly 10 specifically includes shoulder belts, a crotch belt 103 and a central buckle 104. The shoulder belts are arranged on the left and right sides, respectively, and are a left shoulder belt 101 and a right shoulder belt 102. An upper end of the left shoulder belt 101 and an upper end of the right shoulder belt 102 are fixedly connected to left and right sides of an upper part of the seat body 1, respectively. A lower end of the crotch belt 103 is connected to the seat body 1 and is located at the crotch position of the child. The central buckle 104 is connected to an upper end of the crotch belt 103, and a lower end of the left shoulder belt 101 and a lower end of the right shoulder belt 102 are both detachably connected to the central buckle 104.

The safety belt assembly 10 has a tensioned state and a loosened state. When a child sits on the seat body 1, the left shoulder belt 101 and the right shoulder belt 102 are respectively connected to the crotch belt 103 through the central buckle 104, and the safety belt assembly 10 is in the tensioned state, thereby forming an effective restraint on the child to provide safety protection for the child.

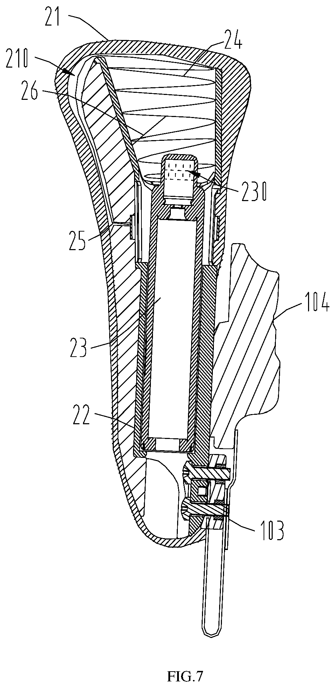

The airbag package 2 is arranged on the safety belt assembly 10, specifically: as shown in FIGs. 7-9, the airbag package 2 is arranged at the rear of the central buckle 104, and a lower part of the airbag package 2 is connected to the crotch belt 103. By arranging the airbag package 2 on the safety belt assembly 10, the airbag package 2 can be installed and used conveniently.

The following is a detailed description of the airbag package 2:

As shown in FIGs. 7-10, the airbag package 2 includes an airbag package cover 21, a high-pressure air cylinder container 22, a high-pressure air cylinder 23 and an airbag 24. The airbag package cover 21 has an airbag receiving chamber 210, the high-pressure air cylinder container 22 is arranged in the airbag receiving chamber 210, the high-pressure air cylinder 23 is contained in the high-pressure air cylinder container 22, the airbag 24 is connected to the high-pressure air cylinder 23, and the airbag 24 is at least partially located in the airbag receiving chamber 210.

Specifically: As shown in FIG. 7, the high-pressure air cylinder container 22 is arranged at the rear of the central buckle 104, and a lower part of the high-pressure air cylinder container 22 is detachably connected to the crotch belt 103. In this embodiment: the lower part of the high-pressure air cylinder container 22 is in a threaded connection with the crotch belt 103, thereby achieving a simple structure and easy installation.

The high-pressure air cylinder 23 stores a high-pressure air therein. As shown in FIG. 7, the high-pressure air cylinder 23 has an openable and closable air outlet 230, and the air outlet 230 is located at the top of the high-pressure air cylinder 23. The air outlet 230 of the high-pressure air cylinder 23 has a closed state and an open state. When the air outlet 230 of the high-pressure air cylinder 23 is in the closed state, the high-pressure air is enclosed inside the high-pressure air cylinder 23. When the air outlet 230 of the high-pressure air cylinder 23 is in the open state, the high-pressure air is ejected from the air outlet 230 of the high-pressure air cylinder 23.

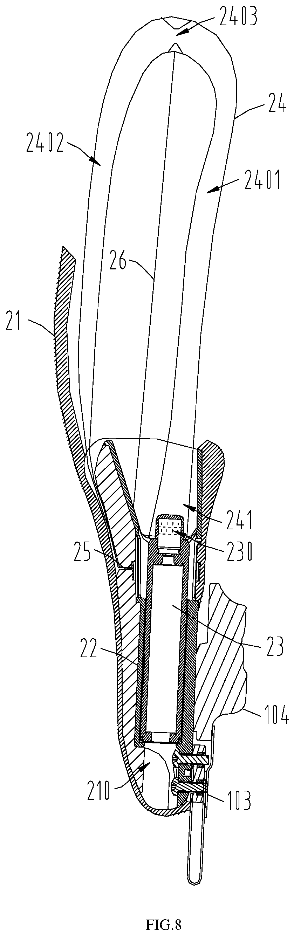

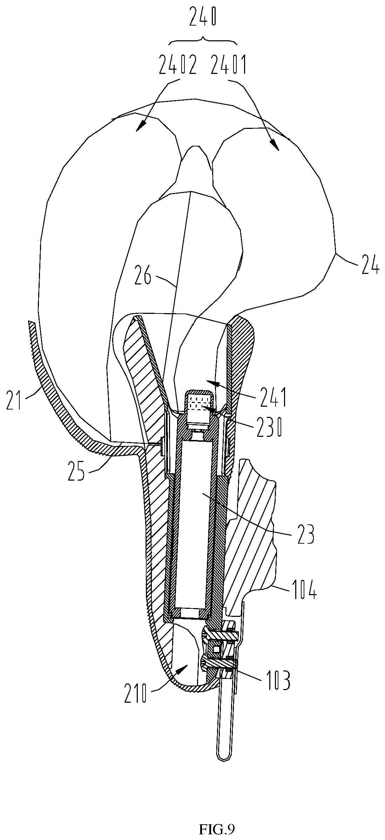

The airbag 24 is a main protective component of the airbag package 2. The airbag 24 is internally provided with an airbag cavity 240, an air inlet 241 is provided on the airbag 24, and the airbag cavity 240 and the air inlet 241 are connected to each other. The air inlet 241 of the airbag 24 is connected to the air outlet 230 of the high-pressure air cylinder 23, and the air inlet 241 of the airbag 24 is fixedly connected to the high-pressure air cylinder container 22 and/or the air outlet 230 of the high-pressure air cylinder 23. Specifically: As shown in FIGs. 8 and 9, the airbag cavity 240 includes a first airbag cavity 2401 and a second airbag cavity 2402, one end of the first airbag cavity 2401 has an opening (that is, one end of the first airbag cavity 2401 forms an air inlet of the airbag 24), one end of the second airbag cavity 2402 is fixed to the high-pressure air cylinder container 22, and the other end of the first airbag cavity 2401 and the other end of the second airbag cavity 2402 are connected by a narrow airflow passage 2403. In this embodiment: The air inlet 241 of the airbag 24 is fixedly connected to the high-pressure air cylinder container 22. That is, the opening at one end of the first airbag cavity 2401 is fixedly connected to the high-pressure air cylinder container 22, and the opening at one end of the first airbag cavity 2401 embraces the air outlet 230 of the high-pressure air cylinder 23, so that the air inlet 241 of the airbag 24 and the air outlet 230 of the high-pressure air cylinder 23 are connected to each other.

The airbag 24 has a folded state and an inflated state. As shown in FIGs. 7 to 10, when the airbag 24 is in the folded state, the airbag 24 is at least partially folded and placed in the airbag package cover 21 and the air outlet 230 of the high-pressure air cylinder 23 is closed; when the airbag 24 is in the inflated state, the air outlet 230 of the high-pressure air cylinder 23 is open, and the high-pressure air stored in the high-pressure air cylinder 23 enters the first airbag cavity 2401 through the air inlet 241 of the airbag 24 from the air outlet 230 of the high-pressure air cylinder 23 and enters the second airbag cavity 2402 through the airflow passage 2403, so that the airbag 24 expands as a whole and at least part of the airbag 24 breaks through the airbag package cover 21 and is shot out of the airbag package cover 21.

Specifically: When the airbag 24 is in the folded state, at least part of the airbag 24 is located in the airbag receiving chamber 210, so the airbag package 2 has a small overall size and occupies less space. In this embodiment: As shown in FIG. 7, when the airbag 24 is in the folded state, the airbag 24 is folded as a whole and placed in the high-pressure air cylinder container 22, and is located above the high-pressure air cylinder 23.

When the airbag 24 is in the inflated state, as shown in FIG. 9, a cross section of the airbag 24 in an up-down direction is in an inverted "C" shape, one end of the inverted "C" shape of the airbag 24 serves as the air inlet 241 of the airbag 24, the other end of the inverted "C" shape of the airbag 24 is fixedly connected to the high-pressure air cylinder container 22, the opening of the inverted "C" shape of the airbag 24 faces the seat body 1. When a car crash causes the child's head to run forward, the middle part of the inverted "C" shape of the airbag 24 can form a good support for the child's head and reduce the impact force, thereby improving safety.

In order to ensure that the airbag 24 forms an inverted "C" shape when inflated and that the inverted "C" shape has a stable structure, the airbag package 2 further includes a first tether 25 and a second tether 26. As shown in FIG. 9, the first tether 25 and the second tether 26 are configured to fixedly connect the airbag 24 to the high-pressure air cylinder container 22.

Specifically: One end of the first tether 25 is fixedly connected to the other end of the airbag 24, the other end of the first tether 25 is fixedly connected to the high-pressure air cylinder container 22. A fixed connection point between the other end of the first tether 25 and the high-pressure air cylinder container 22 is located on an outer wall of the high-pressure air cylinder container 22 and faces the seat body 1. By providing the first tether 25, it can be ensured that the airbag 24 is in an inverted "C" shape when inflated and the other end of the airbag 24 does not tilt upward after inflation.

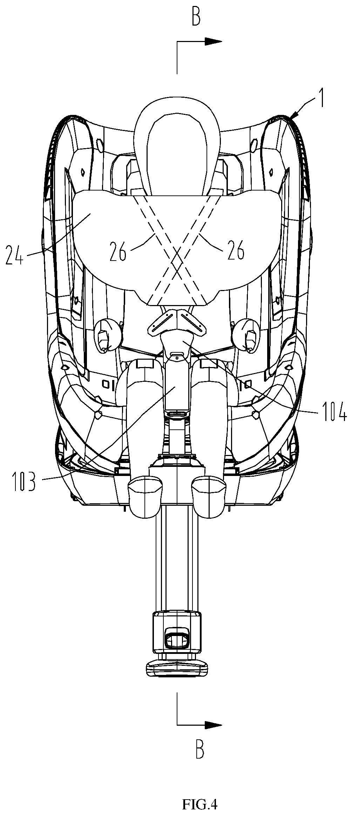

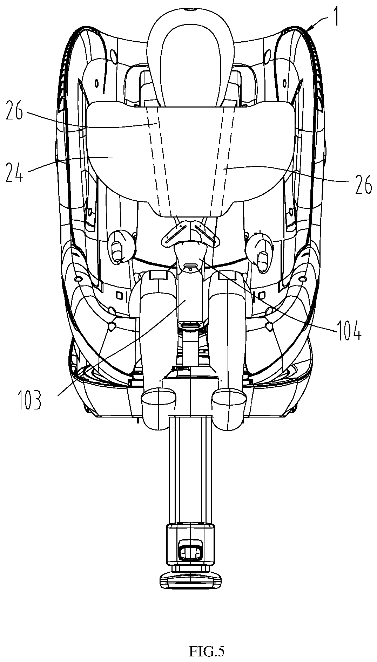

One end of the second tether 26 is fixedly connected to a middle part of the airbag 24, and the other end of the second tether 26 is fixedly connected to the high-pressure air cylinder container 22. In this embodiment: one end of the second tether 26 is fixedly connected to the airbag 24 at the outer wall of the airflow passage 2403, and a connection point between the other end of the second tether 26 and the high-pressure air cylinder container 22 is located on an inner wall of the high-pressure air cylinder container 22. At least one second tether 26 is provided. In this embodiment: As shown in FIG. 4, two second tethers 26 are provided. One ends of the two second tethers 26 are fixedly connected to the middle part of the airbag 24, the other ends of the two second tethers 26 are fixedly connected to the high-pressure air cylinder container 22, and the two second tethers 26 are arranged crosswise. In this way, the airbag 24 in the inflated state is stressed more uniformly, thereby alleviating the magnitude of lateral rocking at the time of a car crash. Of course, the two second tethers 26 may also be arranged in parallel, as shown in FIG. 5. When the airbag 24 is in the folded state, the second tethers 26 are located in the airbag package cover 21 and are in a loosened state; when the airbag 24 is in the inflated state, the second tethers 26 are in a tensioned state, and upper parts of the second tethers 24 are located outside the airbag package cover 21. By providing the second tethers 26, it can be ensured that the airbag 24 as a whole has good tensile support when the airbag 24 is in the inflated state, thereby improving safety.

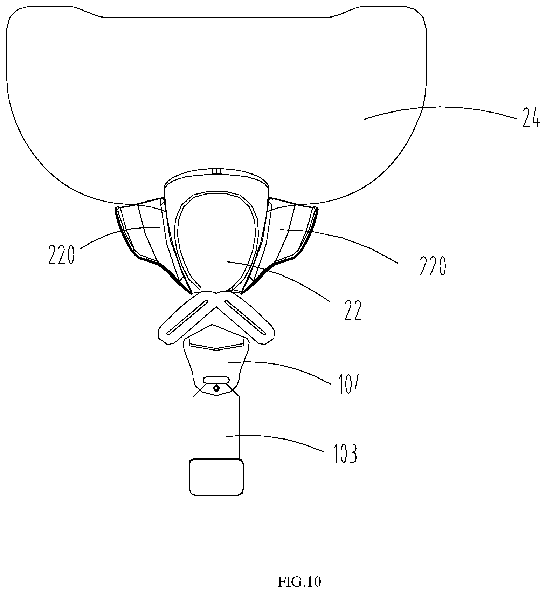

As shown in FIG. 10, the upper part of the high-pressure air cylinder container 22 is provided with mating portions 220 on left and right sides thereof, and the mating portions 220 may be mated with the shoulder belts on the corresponding sides respectively. When the safety belt assembly 10 is in a tensioned state, the left shoulder belt 101 and the right shoulder belt 102 are respectively pressed into the mating portions 220 on the corresponding sides. Moreover, because the lower part of the high-pressure air cylinder container 22 is arranged at the rear of the central buckle 104, the left shoulder belt 101, the right shoulder belt 102 and the central buckle 104 form a three-point limiting structure for the high-pressure air cylinder container 22 (i.e., the airbag package 2), so that an appropriate distance is always maintained between the airbag package 2 and the child's body. In this way, the airbag 24 can provide good support and protection for the child's head after being inflated.

Specifically, as shown in FIG. 10, the mating portions 220 are guide grooves that are concave inward from a front surface of the high-pressure air cylinder container 22, the guide grooves extend obliquely in an up-down direction, and two ends of each guide groove in a length direction respectively penetrate the corresponding ends of the high-pressure air cylinder container 22.

The working process of the airbag package 2 in this embodiment is described in detail below:
As shown in FIG. 7, when a car runs normally, a child sits on the seat body 1 and in this case, the air outlet 230 of the high-pressure air cylinder 23 is in the closed state, the airbag 24 is in the folded state and is folded and stored in the airbag package cover 21, so the overall size is small and the normal use of the seat belt assembly 10 is not affected. In this case, the seat belt assembly 10 is in the tensioned state, and the left shoulder belt 101 and the right shoulder belt 102 are respectively pressed into the mating portions 220 on the corresponding sides of the high-pressure air cylinder container 22.

As shown in FIG. 8, when a car crash happens, the air outlet 230 of the high-pressure air cylinder 23 is automatically triggered and is in an open state, and the high-pressure air stored in the high-pressure air cylinder 23 enters the airbag cavity 240 from the air outlet 230 of the high-pressure air cylinder 23. As a result, the airbag 24 begins to expand and breaks through the top of the airbag package cover 21, and form an inverted "C" shape under the joint action of the first tether 25 and the second tether 26, as shown in FIG. 9. Due to the cooperation of the left shoulder belt 101 and the right shoulder belt 102 with the high-pressure air cylinder container 22, the high-pressure air cylinder container 22 can be prevented from driving the airbag 24 forward, so that an appropriate distance is maintained between the airbag package 2 and the child's body. In this case, if the child's head runs forward, the child' s head may run into the surface of the airbag 24, which plays a cushioning role, thereby avoiding or reducing injuries to the child's head and further improving safety.

### Embodiment 2

In this embodiment, no crotch belt 103 is provided in the safety belt assembly 10, and a lower part of the central buckle 104 is rotatably connected to the seat body 1 by a rotating shaft 105, and the rotating shaft 105 extends in a left-right direction. In this way, the central buckle 104 can rotate forward or backward relative to the seat body 1 around the rotating shaft 105.

When a child needs to sit on the child car safety seat, or when a child needs to be taken out of the child car safety seat, the central buckle 104 is rotated forward relative to the seat body 1 to increase the space between the central buckle 104 and the seat body 1, so that the child can sit on the child car safety seat or be taken out of the child car safety seat.

After the child sits on the child car safety seat, the central buckle 104 is rotated backward relative to the seat body 1, so that the safety belt assembly 10 is in a tightened state and the airbag package 2 is kept from the child's body by an appropriate distance. In this way, when a car crash happens, the child's head runs forward into the surface of the airbag 24, which plays a cushioning role.

The above embodiments are only for illustrating the technical concept and features of the present disclosure. They are intended to help a person familiar with this technology understand the content of the present disclosure and implement it accordingly, but not to limit the scope of the present disclosure. Any equivalent changes or modifications made according to the spirit of the present disclosure should fall within the scope of the present disclosure.

## Claims

1. A child car safety seat, comprising a seat body, the seat body being connected to an airbag package for protecting a child when a car crash happens, **characterized in that**, the airbag package comprises:
an airbag package cover, the airbag package cover having an airbag receiving chamber;
a high-pressure air cylinder storing high-pressure air, the high-pressure air cylinder having an air outlet, wherein the air outlet of the high-pressure air cylinder has a closed state and an open state, and when the air outlet of the high-pressure air cylinder is in the closed state, the high-pressure air is enclosed in the high-pressure air cylinder, and when the air outlet of the high-pressure air cylinder is in the open state, the high-pressure air is ejected from the air outlet of the high-pressure air cylinder;
a high-pressure air cylinder container, the high-pressure air cylinder container being placed in the airbag package cover, the high-pressure air cylinder being contained in the high-pressure air cylinder container; and
an airbag, the airbag having an airbag cavity and an air inlet which are connected to each other, wherein the air inlet of the airbag is connected to the air outlet of the high-pressure air cylinder, and the air inlet of the airbag is fixedly connected to the high-pressure air cylinder container and/or the air outlet of the high-pressure air cylinder; the airbag having a folded state and an inflated state, wherein when the airbag is in the folded state, the airbag is at least partially folded and placed in the airbag package cover and the air outlet of the high-pressure air cylinder is in the closed state, and when the airbag is in the inflated state, the air outlet of the high-pressure air cylinder is in the open state, and the high-pressure air enters the airbag cavity from the air outlet of the high-pressure air cylinder through the air inlet of the airbag, so that at least part of the airbag breaks through the airbag package cover and is shot out of the airbag package cover.

2. The child car safety seat according to claim 1, **characterized in that**, when the airbag is in the inflated state, a cross section of the airbag is in an inverted "C" shape, one end of the inverted "C" shape of the airbag serves as the air inlet of the airbag, and the other end of the inverted "C" shape of the airbag is fixedly connected to the high-pressure air cylinder container.

3. The child car safety seat according to claim 2, **characterized in that**, the airbag package further comprises a first tether, one end of the first tether is connected to the other end of the airbag, and the other end of the first tether is fixedly connected to the high-pressure air cylinder container.

4. The child car safety seat according to claim 2, **characterized in that**, the airbag package further comprises at least one second tether, one end of the second tether is fixedly connected to a middle part of the airbag, and the other end of the second tether is fixedly connected to the high-pressure air cylinder container; when the airbag is in the folded state, the second tether is located in the airbag package cover, and when the airbag is in the inflated state, the second tether is in a tensioned state and is at least partially located outside the airbag package cover.

5. The child car safety seat according to claim 4, **characterized in that**, two second tethers are provided, and the two second tethers are arranged crosswise or in parallel.

6. The child car safety seat according to claim 2, **characterized in that**, the airbag cavity comprises a first airbag cavity and a second airbag cavity, one end of the first airbag cavity forms the air inlet of the airbag, one end of the second airbag cavity is fixed to the high-pressure air cylinder container, and the other end of the first airbag cavity and the other end of the second airbag cavity are connected by an airflow passage.

7. The child car safety seat according to claim 6, **characterized in that**, the airbag package further comprises at least one second tether, one end of the second tether is fixedly connected to the airbag at an outer wall of the airflow passage, and the other end of the second tether is fixedly connected to the high-pressure air cylinder container; when the airbag is in the folded state, the second tether is located in the airbag package cover, and when the airbag is in the inflated state, the second tether is in a tensioned state and is at least partially located outside the airbag package cover.

8. The child car safety seat according to claim 1, **characterized in that**, a safety belt assembly is arranged on the seat body and comprises shoulder belts arranged on left and right sides and a central buckle, wherein a lower part of the central buckle is directly or indirectly connected to the seat body, one ends of the shoulder belts on two sides are connected to the seat body, the other ends of the shoulder belts on two sides are detachably connected to the central buckle, and a lower part of the high-pressure air cylinder container is arranged at the rear of the central buckle.

9. The child car safety seat according to claim 8, **characterized in that**, an upper part of the high-pressure air cylinder container is provided with mating portions on left and right sides thereof, and the mating portions are mated with the shoulder belts on the corresponding sides respectively; when the safety belt assembly is in a tensioned state, the shoulder belts on two sides are respectively pressed into the mating portions on the corresponding sides.

10. The child car safety seat according to claim 9, **characterized in that**, the mating portions are guide grooves that are concave inward from a front surface of the high-pressure air cylinder container, the guide grooves extend obliquely in an up-down direction, and two ends of each guide groove in a length direction respectively penetrate the corresponding ends of the high-pressure air cylinder container.

11. The child car safety seat according to claim 8, **characterized in that**, the safety belt assembly further comprises a crotch belt, one end of the crotch belt is connected to the seat body, and the other end of the crotch belt is connected to the central buckle.

12. The child car safety seat according to claim 11, **characterized in that**, a lower end of the high-pressure air cylinder container is connected to the crotch belt.

13. The child car safety seat according to claim 8, **characterized in that**, the lower part of the central buckle is rotatably connected to the seat body by a rotating shaft, and the rotating shaft extends in a left-right direction.

14. The child car safety seat according to claim 1, **characterized in that**, when the airbag is in the folded state, at least part of the high-pressure air cylinder container, at least part of the airbag, and at least part of the high-pressure air cylinder are located in the airbag receiving chamber of the airbag package cover.

15. The child car safety seat according to claim 1, **characterized in that**, when a car runs normally, the air outlet of the high-pressure air cylinder is in the closed state, and when a car crash happens, the air outlet of the high-pressure air cylinder is automatically triggered to enter the open state.

16. An airbag package, **characterized by**, comprising:
an airbag package cover, the airbag package cover having an airbag receiving chamber;
a high-pressure air cylinder storing high-pressure air, the high-pressure air cylinder having an air outlet, wherein the air outlet of the high-pressure air cylinder has a closed state and an open state, and when the air outlet of the high-pressure air cylinder is in the closed state, the high-pressure air is enclosed in the high-pressure air cylinder, and when the air outlet of the high-pressure air cylinder is in the open state, the high-pressure air is ejected from the air outlet of the high-pressure air cylinder;
a high-pressure air cylinder container, the high-pressure air cylinder container being placed in the airbag package cover, the high-pressure air cylinder being contained in the high-pressure air cylinder container; and
an airbag, the airbag having an airbag cavity and an air inlet which are connected to each other, wherein the air inlet of the airbag is connected to the air outlet of the high-pressure air cylinder, and the air inlet of the airbag is fixedly connected to the high-pressure air cylinder container and/or the air outlet of the high-pressure air cylinder; the airbag having a folded state and an inflated state, wherein when the airbag is in the folded state, the airbag is at least partially folded and placed in the airbag package cover and the air outlet of the high-pressure air cylinder is in the closed state, and when the airbag is in the inflated state, the air outlet of the high-pressure air cylinder is in the open state, and the high-pressure air enters the airbag cavity from the air outlet of the high-pressure air cylinder through the air inlet of the airbag, so that at least part of the airbag breaks through the airbag package cover and is shot out of the airbag package cover.

17. The airbag package according to claim 16, **characterized in that**, when the airbag is in the inflated state, a cross section of the airbag is in an inverted "C" shape, one end of the inverted "C" shape of the airbag serves as the air inlet of the airbag, and the other end of the inverted "C" shape of the airbag is fixedly connected to the high-pressure air cylinder container.

18. The airbag package according to claim 17, **characterized in that**, the airbag package further comprises a first tether, one end of the first tether is connected to the other end of the airbag, and the other end of the first tether is fixedly connected to the high-pressure air cylinder container.

19. The airbag package according to claim 17, **characterized in that**, the airbag package further comprises at least one second tether, one end of the second tether is fixedly connected to a middle part of the airbag, and the other end of the second tether is fixedly connected to the high-pressure air cylinder container; when the airbag is in the folded state, the second tether is located in the airbag package cover, and when the airbag is in the inflated state, the second tether is in a tensioned state and is at least partially located outside the airbag package cover.

20. The airbag package according to claim 19, **characterized in that**, two second tethers are provided, and the two second tethers are arranged crosswise or in parallel.

21. The child car safety seat according to claim 17, **characterized in that**, the airbag cavity comprises a first airbag cavity and a second airbag cavity, one end of the first airbag cavity forms the air inlet of the airbag, one end of the second airbag cavity is fixed to the high-pressure air cylinder container, and the other end of the first airbag cavity and the other end of the second airbag cavity are connected by an airflow passage.

22. The airbag package according to claim 21, **characterized in that**, the airbag package further comprises at least one second tether, one end of the second tether is fixedly connected to the airbag at an outer wall of the airflow passage, and the other end of the second tether is fixedly connected to the high-pressure air cylinder container; when the airbag is in the folded state, the second tether is located in the airbag package cover, and when the airbag is in the inflated state, the second tether is in a tensioned state and is at least partially located outside the airbag package cover.

23. The airbag package according to claim 16, **characterized in that**, when the airbag is in the folded state, at least part of the high-pressure air cylinder container, at least part of the airbag, and at least part of the high-pressure air cylinder are located in the airbag receiving chamber of the airbag package cover.
